# EUROPÄISCHE PATENTSCHRIFT

(11) **EP 1 890 919 B1**
(45) Veröffentlichungstag und Bekanntmachung des Hinweises auf die Patenterteilung: **24.03.2010**
(21) Anmeldenummer: 06752565.9
(22) Anmeldetag: 21.04.2006
(51) Int. Cl.: B60S 1/40

(54) **VORRICHTUNG ZUM GELENKIGEN VERBINDEN EINES WISCHBLATTS MIT EINEM WISCHARM EINES SCHEIBENWISCHERS**
DEVICE FOR CONNECTING A WIPER BLADE TO A WIPER ARM OF A WINDSHIELD WIPER IN AN ARTICULATED MANNER
DISPOSITIF DE CONNEXION ARTICULEE D'UN BALAI D'ESSUIE-GLACE A UN BRAS D'ESSUIE-GLACE

(30) Priorität: 01.06.2005 DE 102005025542
(43) Veröffentlichungstag der Anmeldung: 27.02.2008
(73) Patentinhaber: ROBERT BOSCH GMBH, 70442 Stuttgart (DE)
(72) Erfinder: MAHFOUDH, Samir, 77815 Buehl (DE); LEUTSCH, Wolfgang, 77830 Buehlertal (DE); VERELST, Hubert, B-3300 Tienen (BE); KINNAERT, Erik, B-3700 Tienen (BE)
(86) Internationale Anmeldenummer: PCT/EP2006/061757
(87) Internationale Veröffentlichungsnummer: WO 2006/128763

(56) Entgegenhaltungen:
- WO-A-2004/098962
- DE-A1- 3 709 810
- DE-A1- 10 347 637
- DE-B- 1 123 579
- DE-U1-202004 012 547

## Beschreibung

### Stand der Technik

Die Erfindung geht von einer Vorrichtung zum gelenkigen Verbinden eines Wischblatts mit einem Wischarm eines Scheibenwischers nach dem Oberbegriff des Anspruchs 1 aus.

Aus der WO 02/40328 A1 ist eine derartige Vorrichtung bekannt. Sie umfasst ein Anschlusselement in Form einer Blechkralle, einen Adapter aus Kunststoff und ein mit dem Wischarm fest verbundenes Verbindungselement. Das Anschlusselement ist an einem Tragelement des Wischblatts in Form zweier parallel verlaufender Federschienen mittels Krallen und/oder durch Schweißen befestigt. Es besitzt ein u-förmiges Querschnittprofil, wobei ausgehend von einem dem Tragelement benachbarten Bodenteil Seitenwände etwa um 90° von dem Tragelement weggebogen sind. In den Seitenwänden sind Öffnungen vorgesehen, in die ein Lagerbolzen drehfest eingesetzt ist. Auf diesem ist der Adapter, der zwischen den Seitenwänden des Anschlusselements seitlich geführt ist, mit einer Nabe schwenkbar gelagert. Der Adapter besitzt Rastmittel und Haltemittel, mit denen er in das zum Wischblatt hin offene Profil des Verbindungselements eingeklippst ist. In der montierten Stellung übergreift das Verbindungselement sowohl den Adapter als auch die Seitenwände des Anschlusselements von außen her. Bei einer Relativbewegung zwischen dem Wischarm und dem Wischblatt während eines Wischvorgangs kann es zwischen der Innenseite des Verbindungselements und der Außenseite des Anschlusselements zu Berührungen kommen. Da diese beiden Teile in der Regel aus Metall gefertigt sind, entsteht hierbei eine erhöhte Reibung, wodurch außerdem der Korrosionsschutz beschädigt werden kann.

Eine ähnliche Vorrichtung zum gelenkigen Verbinden eines Wischblatts mit einem Wischarm ist aus der DE 103 47 637 A1 bekannt. Hierbei besitzt das Anschlusselement in Form einer Blechkralle einen mittleren, in Längsrichtung verlaufenden Führungssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist der Adapter mit Lageröffnungen schwenkbar gelagert, die in seitlichen Federzungen angeordnet sind. Der Adapter, der aus Kunststoff gefertigt ist, umfasst die Blechkralle von außen und wird mittels Rastelementen und Halteelementen in das zum Wischblatt hin offene Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei in das Verbindungselement eingesetzt. Somit entkoppelt der Adapter aus Kunststoff das Verbindungselement vom Anschlusselement, wodurch eine gute Korrosionsbeständigkeit und geringe Reibungsverluste gewährleistet sind.
Bedingt durch die Öffnungen und Spalte zwischen dem Anschlusselement, dem Adapter und dem Verbindungselement wird beim Betrieb des Scheibenwischers das Spritz- und Regenwasser unter dem hohen Druck des Fahrtwinds in die Anschlussvorrichtung hineingepresst. Das im Anschlusselement gesammelte Wasser wird durch den Unterdruck, insbesondere hinter einem Spoiler, aus der Anschlussvorrichtung gesaugt und durch die Strömung bei der Abwärtsbewegung auf das bereits gereinigte Wischfeld geschleudert. Dieser Vorgang wird als "Overspray" oder "Wasserüberspritzen" bezeichnet und wird als störend empfunden.

### Vorteile der Erfindung

Nach der Erfindung ist im Verbindungselement auf der dem Wischarm zugewandten Seite ein Füllstück angeordnet, das dafür sorgt, dass der Fahrtwind Spritz- und Regenwasser nicht in die Spalte und Hohlräume der Vorrichtung hineinpresst, insbesondere, wenn der Fahrtwind bei der Wischbewegung des Scheibenwischers eine nennenswerte Komponente in Längsrichtung des Wischblatts aufweist. Eine Verbesserung des Effekts wird erzielt, wenn das Füllstück im Anschluss an den Adapter und dichtend an den Innenwänden des Verbindungselements und/oder der angrenzenden Stirnseite des Adapters anliegt. Damit das Wasser nicht entlang des Wischblatts, insbesondere wenn ein Spoiler vorgesehen ist, in die Vorrichtung eindringen kann, ist gemäß einer Ausgestaltung der Erfindung auf der Antriebsseite des Anschlusselements eine quer zum Wischblatt verlaufende Schottwand vorgesehen, die in einen Schlitz des Füllstücks mit geringem Spiel eingreift. An der Schottwand wird das Wasser, das entlang des Wischarms und des Spoilers in Richtung der Vorrichtung fließt, zur Fahrzeugscheibe hin abgelenkt, sodass es sich nicht in der Vorrichtung sammeln kann. Die erfindungsgemäßen Maßnahmen bewirken, dass erheblich weniger Wischzyklen benötigt werden, um beim Ende des Regens oder des Spritzwassers eine tropfenlose Fahrzeugscheibe zu erhalten. Es ist ersichtlich, dass die Schottwand auch ohne das Füllstück einen nennenswerten Effekt erzeugt und deshalb auch bei Wischblättern eingesetzt werden kann, die mit Wischarmen ohne Füllstück verbunden werden sollen.

Nach einer weiteren Ausgestaltung der Erfindung ist vorgesehen, dass das Füllstück mit mindestens einem Bord an einem Rand an der offenen Seite des Verbindungselements anliegt. Ferner sieht eine andere Ausgestaltung vor, dass die an das Füllstück angrenzende Stirnseite des Adapters überlappend in Aussparungen an der Frontseite des Füllstücks eingreift. Durch die mehrfache Umlenkung an den Übergängen der Bauteile wird die Abdichtung zwischen dem Füllstück und den angrenzenden Bauteilen verbessert.

Das Füllstück reicht vom Adapter ein Stück weit in das Verbindungselement, das am freien Ende des Wischarms befestigt oder angeformt ist. Ist das Verbindungselement seitlich gekröpft, sodass das Wischblatt etwa seitlich parallel zum Wischarm verläuft, wird das Füllstück zweckmäßigerweise mindestens den Bereich der Kröpfung ausfüllen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine erfindungsgemäße Vorrichtung in einer perspektivischen Teilansicht von oben,
Fig. 2 eine perspektivische Darstellung eines Füllstücks,
Fig. 3 eine perspektivische Seitenansicht eines Wischblatts mit einem Adapter, jedoch ohne Verbindungselement,
Fig. 4 eine perspektivische Darstellung einer erfindungsgemäße Vorrichtung mit einem abgeklappten Verbindungselement und
Fig. 5 eine Ansicht eines Verbindungselements von unten.

### Beschreibung des Ausführungsbeispiels

Ein Wischarm 10 ist über eine Vorrichtung 20 mit einem Wischblatt 12 gelenkig verbunden, das zwei seitlich in eine Wischleiste 18 eingelegte Tragelemente 16 und einen Spoiler 14 umfasst. Die Tragelemente 16 haben die Form flacher Federschienen, die in Längsrichtung so vorgebogen sind, dass die Wischleiste 18 unter der Kraft des Wischarms 10 in Längsrichtung mit einer günstigen Druckverteilung an einer Fahrzeugscheibe anliegt.

Die Vorrichtung 20 umfasst ein Anschlusselement 22, das mit Krallen 24 an den Tragelementen 16 befestigt ist. Zusätzlich oder anstelle der Krallen 24 kann das Anschlusselement 22 durch Schweißen mit den Tragelementen 16 verbunden sein. Das Anschlusselement 22 besitzt einen in Längsrichtung verlaufenden Führungssteg 26, der eine Gelenknabe 28 für eine nicht dargestellte Gelenkachse aufweist, auf der ein Adapter 30 schwenkbar gelagert ist. Dieser weist Führungsprofile 32 auf, mit denen er gegenüber dem Führungssteg 26 und einem Verbindungselement 38 seitlich geführt ist. Der Adapter 30 ist durch Befestigungsmittel 40 lösbar mit dem Verbindungselement 38 verbunden, das seinerseits am freien Ende des Wischarms 10 befestigt bzw. angeformt ist. Der Adapter 30 besitzt an seiner Oberseite eine Taste 34, die über eine Federzunge 36 am Adapter 30 angebunden ist und in montierter Stellung in eine Öffnung 42 des Verbindungselements 38 einrastet. Durch die Taste 34 wird der Adapter 30 in Längsrichtung relativ zum Verbindungselement 38 fixiert.

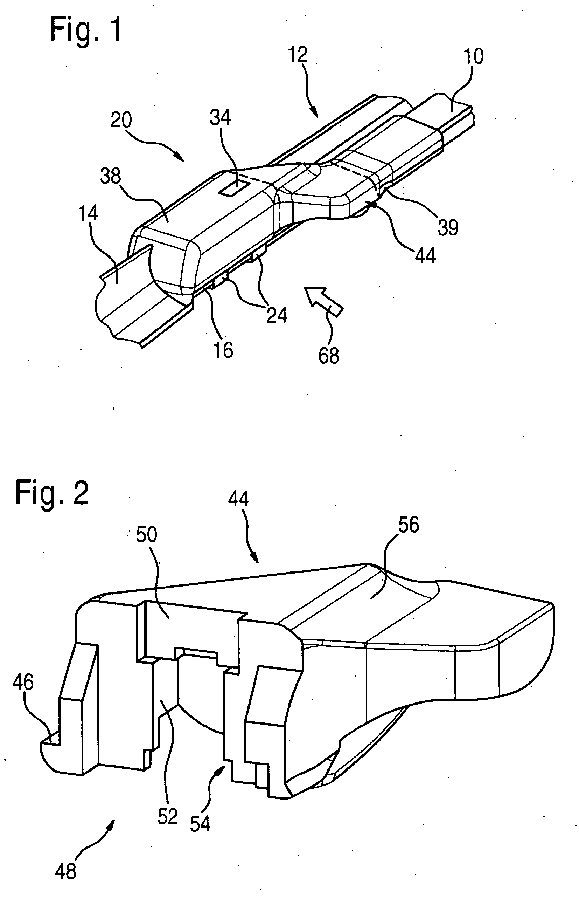

Bei der gezeigten Ausführung (Fig. 1) verläuft der Wischarm 10 in Anströmrichtung 68 des Fahrtwinds vor dem Wischblatt 12 und etwa parallel zu diesem. Dadurch ist das Verbindungselement 38 entsprechend seitlich gekröpft. Da der Wischarm 10 einen geringeren Abstand von der Fahrzeugscheibe hat als die Oberseite des Verbindungselements 38, ergibt sich im Verlauf des Verbindungselements 38 eine Stufe 39, die etwa parallel zum Wischarm 10 verläuft. Im Anschluss an den Adapter 30 ist im Kröpfungsbereich ein Füllstück 44 angeordnet, das dichtend an den Innenwänden des Verbindungselements 38 und an der zugewandten Stirnseite des Adapters 30 anliegt. In Fig. 1 ist die Lage des Füllstücks 44 mit gestrichelten Linien angedeutet. Es füllt den Hohlraum zwischen dem Adapter 30 und dem als Wischstange ausgeführten Ende des Wischarms 10 aus und besitzt eine zur Stufe 39 des Verbindungselements 38 analoge Stufe 56. Ist das Verbindungselement 38 an dem Wischarm 10 angeformt, ist es zweckmäßig, dass das Füllstück 44 so weit in den Wischarm 10 hineinragt, dass das an ihm entlang fließende Wasser in einiger Entfernung von der Vorrichtung 20 durch das Füllstück 44 zur Fahrzeugscheibe abgelenkt wird.

Zur besseren Abdichtung des Füllstücks 44 gegenüber dem Verbindungselement 38 besitzt das Füllstück 44 einen Bord 46, der einen unteren Rand 47 des Verbindungselements 38 mindestens teilweise überdeckt. Ferner besitzt das Füllstück 44 an seiner Frontseite 48 zum Adapter 30 hin Aussparungen 50 und 52, in die angrenzende Teile des Adapters 30, z.B. die Taste 34 und das Führungsprofil 32, überlappend eingreifen und somit einen dichten Anschluss bilden. Eine weitere Aussparung 54 ist an der unteren Seite des Füllstücks 44 für den oberen Teil der Wischleiste 18 vorgesehen (Fig. 2).

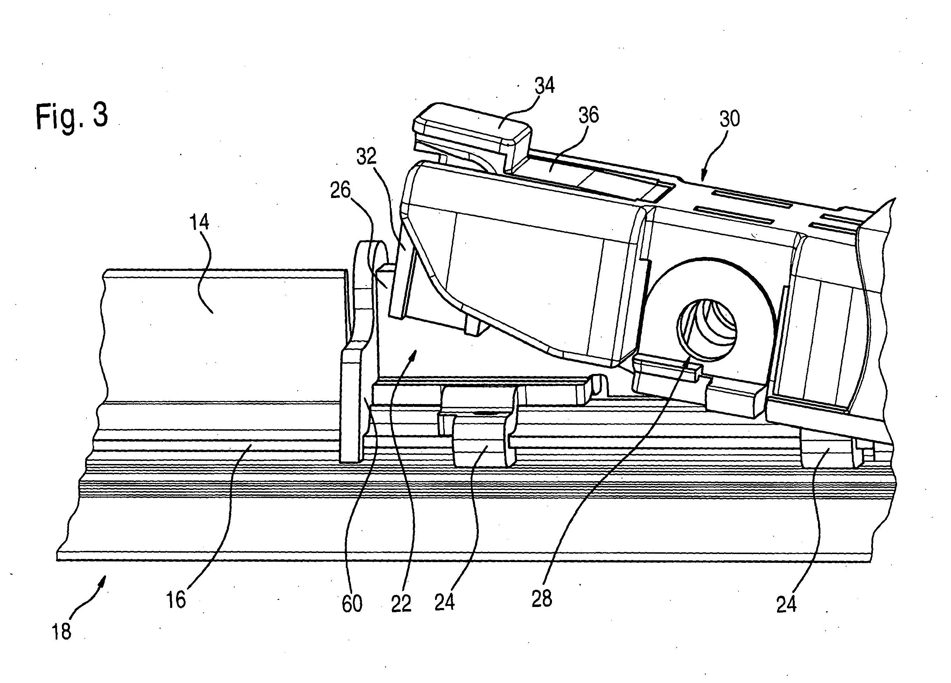

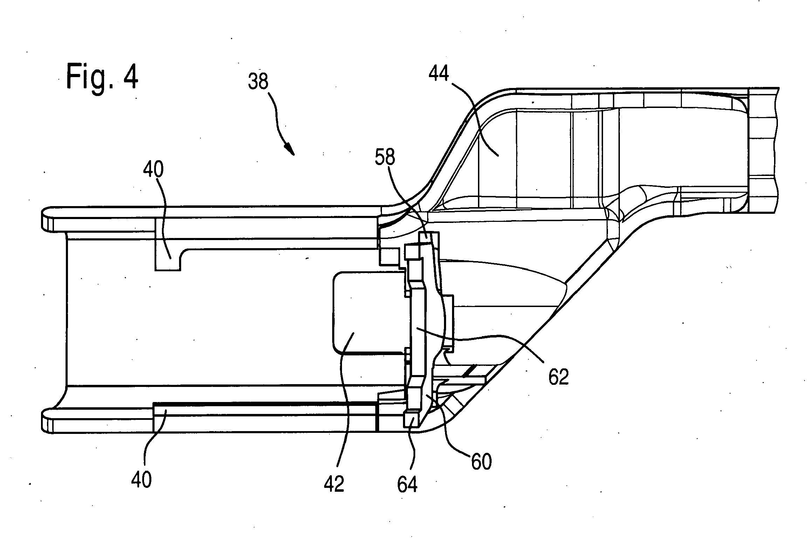

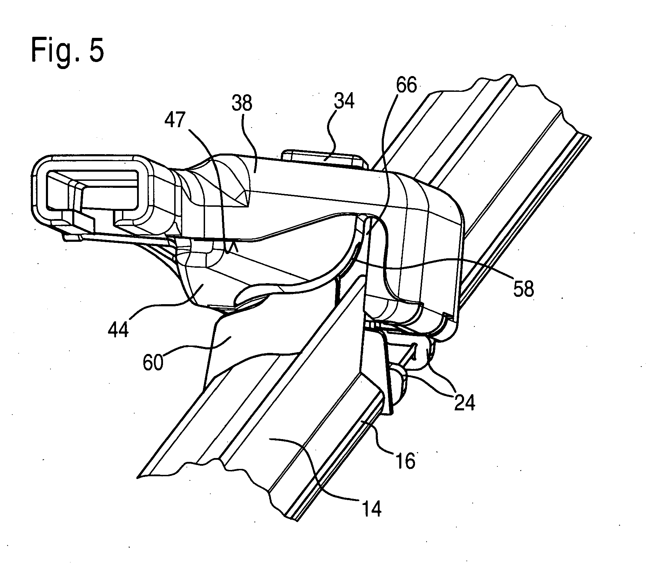

Um zu verhindern, dass Wasser, das in Längsrichtung des Wischblatts 12 oder des Wischarms 10 fließt, in die Vorrichtung 20 eindringt und sich dort ansammelt, ist auf dem Wischblatt 12 quer zur Längsrichtung eine Schottwand 60 angeordnet, die mit Krallen 64 an den Tragelementen 16 befestigt ist (Fig. 3). Die Schottwand 60 besitzt zur Wischleiste 18 hin eine Aussparung 62, die dichtend an dem oberen Teil der Wischleiste 18 anliegt (Fig. 4). Die Schottwand 60 greift mit geringem Spiel in einen Schlitz 58 des Füllstücks 44 (Fig. 5), sodass ein Durchfluss in Längsrichtung wirksam unterbrochen ist. Dies ist insbesondere zweckmäßig, wenn das Wischblatt 10 einen Spoiler 14 besitzt, durch den in der Regel vermehrt Wasser in Längsrichtung des Wischblatts 12 transportiert wird. Im Bereich des Anschlusselements 22 ist im Spoiler 14 ein Fenster vorgesehen. Zu beiden Seiten des Fensters ragt der Spoiler 14 in ein Anschlussprofil 66 des Füllstücks 44 und des Verbindungselements 38.

## Patentansprüche

1. Vorrichtung (20) zum gelenkigen Verbinden eines Wischblatts (12) mit einem Wischarm (10) eines Scheibenwischers, der ein Verbindungselement (38) aufweist, das mit einem Anschlusselement (22) des Wischblatts (12) verbunden werden kann und das ein zum Anschlusselement (22) hin offenes Profil hat, **dadurch gekennzeichnet, dass** im Verbindungselement (38) auf der dem Wischarm (10) zugewandten Seite ein Füllstück (44) angeordnet ist, das dichtend an den Innenwänden des Verbindungselements (38) anliegt.

2. Vorrichtung (20) nach Anspruch 1, **dadurch gekennzeichnet, dass** das an dem mit einem Tragelement (16) des Wischblatts (12) fest verbundenen Anschlusselement (22) ein Adapter (30) schwenkbar gelagert ist, wobei der Adapter (30) in dem zum Anschlusselement (22) hin offenen Profil des Verbindungselements (38) durch Befestigungsmittel (34, 40) fixiert ist und das Füllstück (44) im Anschluss an den Adapter (30) angeordnet ist und dichtend an den Innenwänden des Verbindungselements (38) und/oder der angrenzenden Stirnseite des Adapters (30) anliegt.

3. Vorrichtung (20) nach Anspruch 1 oder 2, **dadurch gekennzeichnet, dass** das Füllstück (44) mit mindestens einem Bord (46) an einem Rand (47) an der offenen Seite des Verbindungselements (38) anliegt.

4. Vorrichtung (20) nach Anspruch 2 oder 3, **dadurch gekennzeichnet, dass** die an das Füllstück (44) angrenzende Stirnseite des Adapters (30) überlappend in Aussparungen (50, 52, 54) an der Frontseite (48) des Füllstücks (44) eingreift.

5. Vorrichtung (20) nach einem der vorhergehenden Ansprüche, **dadurch gekennzeichnet, dass** auf der Antriebsseite des Anschlusselements (22) eine quer zum Wischblatt (12) verlaufende Schottwand (60) vorgesehen ist, die in einen Schlitz (58) des Füllstücks (44) mit geringem Spiel eingreift.

## Claims

1. Device (20) for the articulated connection of a wiper blade (12) to a wiper arm (10) of a windscreen wiper, which has a connecting element (38) which can be connected to a junction element (22) of the wiper blade (12) and has a profile open towards the junction element (22), **characterized in that** the connecting element (38) has arranged in it, on the side facing the wiper arm (10), a filler piece (44) which bears sealingly against the inner walls of the connecting element (38).

2. Device (20) according to Claim 1, **characterized in that** an adapter (30) is mounted pivotably on the junction element (22) fixedly connected to a carrying element (16) of the wiper blade (12), the adapter (30) being fixed in the profile, open towards the junction element (22), of the connecting element (38) by fastening means (34, 40), and the filler piece (44) being arranged adjacently to the adapter (30) and bearing sealingly against the inner walls of the connecting element (38) and/or the continguous end face of the adapter (30).

3. Device (20) according to Claim 1 or 2, **characterized in that** the filler piece (44) bears with at least one rim (46) against a margin (47) on the open side of the connecting element (38).

4. Device (20) according to Claim 2 or 3, **characterized in that** that end face of the adapter (30) which is contiguous to the filler piece (44) engages in an overlapping manner in clearances (50, 52, 54) on the front side (48) of the filler piece (44).

5. Device (20) according to one of the preceding claims, **characterized in that** a partition (60) running transversely with respect to the wiper blade (12) is provided on the drive side of the junction element (22) and engages with low play into a slot (58) of the filler piece (44).

## Revendications

1. Dispositif (20) pour connecter de manière articulée un balai d'essuie-glace (12) à un bras d'essuie-glace (10) d'un essuie-glace, qui présente un élément de connexion (38), qui peut être connecté à un élément de raccordement (22) du balai d'essuie-glace (12) et qui a un profil ouvert vers l'élément de raccordement (22), **caractérisé en ce qu'**une pièce de remplissage (44) est disposée dans l'élément de connexion (38) du côté tourné vers le bras d'essuie-glace (10), laquelle s'applique hermétiquement contre les parois intérieures de l'élément de connexion (38).

2. Dispositif (20) selon la revendication 1, **caractérisé en ce qu'**un adaptateur (30) est monté de manière pivotante sur l'élément de raccordement (22) connecté fixement à un élément de support (16) du balai d'essuie-glace (12), l'adaptateur (30) étant fixé dans le profilé, ouvert vers l'élément de raccordement (22), de l'élément de connexion (38), par des moyens de fixation (34, 40) et la pièce de remplissage (44) étant disposée à la suite de l'adaptateur (30) et s'appliquant hermétiquement contre les parois intérieures de l'élément de connexion (38) et/ou le côté frontal adjacent de l'adaptateur (30).

3. Dispositif (20) selon la revendication 1 ou 2, **caractérisé en ce que** la pièce de remplissage (44) s'applique avec au moins un rebord (46) contre un bord (47) sur le côté ouvert de l'élément de connexion (38).

4. Dispositif (20) selon la revendication 2 ou 3, **caractérisé en ce que** le côté frontal de l'adaptateur (30) adjacent à la pièce de remplissage (44) vient en prise par chevauchement dans des évidements (50, 52, 54) au niveau du côté avant (48) de la pièce de remplissage (44).

5. Dispositif (20) selon l'une quelconque des revendications précédentes, **caractérisé en ce qu'**une paroi de séparation (60) s'étendant transversalement au balai d'essuie-glace (12) est prévue sur le côté d'entraînement de l'élément de raccordement (22), laquelle vient en prise avec un faible jeu dans une fente (58) de la pièce de remplissage (44).
